# EUROPÄISCHE PATENTSCHRIFT

(11) **EP 1 707 826 B1**
(45) Veröffentlichungstag und Bekanntmachung des Hinweises auf die Patenterteilung: **18.04.2012**
(21) Anmeldenummer: 05025294.9
(22) Anmeldetag: 19.11.2005
(51) Int. Cl.: F16B 19/10, F16B 21/16

(54) **Kugelsperrbolzen**
Ball locking bolt
Goujon à bille de verrouillage

(30) Priorität: 31.03.2005 DE 202005005057 U
(43) Veröffentlichungstag der Anmeldung: 04.10.2006
(73) Patentinhaber: Erwin Halder KG, 88480 Achstetten-Bronnen (DE)
(72) Erfinder: Halder, Stefan, 88471 Laupheim (DE)
(74) Vertreter: Hentrich, Swen

(56) Entgegenhaltungen:
- GB-A- 971 537
- US-A- 2 769 363
- US-A- 3 117 484
- US-A- 5 394 594
- US-A- 6 112 378

## Beschreibung

Die Erfindung betrifft einen Kugelsperrbolzen zur lösbaren Befestigung an einem eine Öffnung mit einer Hinterschneidung aufweisenden Gegenstand, mit einem eine Führungsaufnahme aufweisenden Fixierbolzen, der mit einem Griff versehen ist und an einem dem Griff gegenüberliegenden, freien Ende mindestens ein Verriegelungselement wie eine Sperrkugel oder dergl. aufweist, das durch einen relativ zum Fixierbolzen in der Führungsaufnahme gegen die Kraft einer am Fixierbolzen abgestützten Feder verschiebbaren Stößel aus einer den Durchtritt des Fixierbolzens durch die Öffnung sperrenden Sperrstellung in eine den Durchtritt freigebende, in eine Ausnehmung des Stößels reichende Lösestellung verstellbar ist.

Ein derartiger Kugelsperrbolzen ist beispielsweise aus der US 3 117 484 (siehe Oberbegriff des Anspruchs 1) oder der GB 971 537 bekannt. Kugelsperrbolzen haben in der Praxis weite Verbreitung gefunden, um schnell und reversibel an dem Gegenstand einen Stab zu befestigen, der der räumlichen Festlegung des Gegenstandes oder eines zweiten Gegenstandes relativ zu dem ersten dient. Derartige Kugelsperrbolzen haben sich in der Praxis bewährt, sind jedoch nur relativ aufwendig herzustellen, da in einer Bohrung des Fixierbolzens die Feder eingesetzt ist, die gegen den gleichfalls in die Bohrung eingesetzten Stößel drückt, der durch eine Einbördelung des Randes der Bohrung in dieser gesichert ist. Weiterhin ist nachteilig, dass nach einem durch Verschleiß bedingten Ermüdungsbruch der Feder eine kostengünstige Reparatur nicht möglich ist.

Der Erfindung liegt daher die Aufgabe zugrunde, einen Kugelsperrbolzen der eingangs genannten Art so auszubilden, dass dieser einen einfacheren und kostengünstiger herzustellenden Aufbau besitzt.

Diese Aufgabe wird nach der Erfindung bei einem Kugelsperrbolzen der eingangs genannten Art dadurch gelöst, dass die Feder durch einen elastisch verformbaren Steg des Griffes gebildet ist, der dem aus der Führungsaufnahme herausragenden Ende des Stößels anliegt.

Mit einer derartigen Gestaltung ist der große Vorteil verbunden, dass die Feder nicht innerhalb des Kugelsperrbolzens, insbesondere nicht innerhalb des Fixierbolzens angeordnet werden muss, sondern außerhalb positioniert werden kann in vorteilhafter Verknüpfung mit dem Griff, wobei darüber hinaus durch die mittels des Steges vergrößerte Auflagefläche eine vereinfachte Bedienbarkeit gegeben ist, da nicht nur unmittelbar die Stirnseite des Stößels mit der kleinen Querschnittsfläche beaufschlagt werden muss.

Weiterhin als vorteilhaft hat es sich erwiesen, wenn der Griff einen eine Öse bildenden geschlossenen Ring aufweist, dessen dem Fixierbolzen abgewandter Bogen den Steg bildet. Bei dieser Gestaltung ist ein freies Ende des Steges vermieden, wobei durch den Bogen weiterhin in jedem Zustand des Kugelsperrbolzens freistehende scharfe Kanten vermieden bzw. abgedeckt sind.

Um einen sicheren Wechsel aus der Lösestellung in die Sperrstellung und damit eine hohe Betriebssicherheit zu gewährleisten, ist weiterhin vorgesehen, dass das aus der Führungsaufnahme heraus ragende Ende des Stößels an dem Steg verankert ist und so ein echter Formschluss bereit gestellt ist, der bei einer Rückkehr der Feder in ihren Ruhezustand die Verstellung des Stößels in die Sperrstellung sicherstellt. Dazu ist zweckmäßigerweise die Gestaltung so betroffen, dass an dem den Steg zugeordneten Ende des Stößels mit einer Stegaufnahme zusammenwirkende Widerhaken ausgebildet sind, die an dem Stößel in einfacher Weise durch spanabhebende Bearbeitung ausgebildet werden können, während in der Stegaufnahme durch die Widerhaken beim Zusammenführen ein Verzahnungseingriff erzeugt werden kann.

Diese Vorteile lassen sich auch an anderer Stelle des Kugelsperrbolzens realisieren, indem an dem dem Griff zugeordneten Ende des Fixierbolzens mit einer Griffaufnahme zusammenwirkende Widerhaken ausgebildet sind.

Ganz besonders bevorzugt im Rahmen der Erfindung ist eine Ausführungsform, die dadurch gekennzeichnet ist, dass der Griff als aus einem Elastomer gefertigtes Spritzgußteil gebildet ist. Diese Ausführungsform zeichnet sich insbesondere durch ihre kostengünstige Herstellungsweise aus, bei der der Griff auch eine komplexe Gestalt erhalten kann und Verzahnungen für das Zusammenwirken mit dem Widerhaken ohne Probleme zu realisieren sind. Ein derartiger Griff stellt das Widerlager für die Nutzer bei der Bedienung des Kugelsperrbolzens bereit und integriert in funktionell und ästhetisch vorteilhafter Weise die Feder, so dass bei einer Abnutzung des Griffes dieser auch in einfacher Weise ausgewechselt werden kann, so dass die Möglichkeit geschaffen ist, ohne Kostennachteil den Kugelsperrbolzen zu warten und die Griffform an den gewünschten Einsatzzweck anzupassen.

Im folgenden wird die Erfindung an einem in der Zeichnung dargestellten Ausführungsbeispiel näher erläutert; es zeigen:
- Fig. 1: eine perspektivische Darstellung eines erfindungsgemäßen Kugelsperrbolzens in der der Sperrstellung entsprechenden Lage des Stößels,

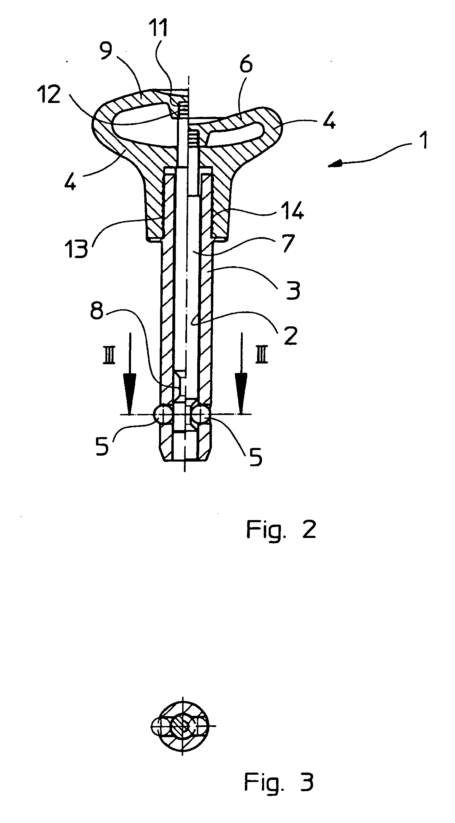

- Fig. 2: einen Längsschnitt durch den Kugelsperrbolzen aus Figur 1, links in der Sperrstellung dargestellt, rechts in der Lösestellung,
- Fig. 3: den Schnitt III-III aus Figur 2,

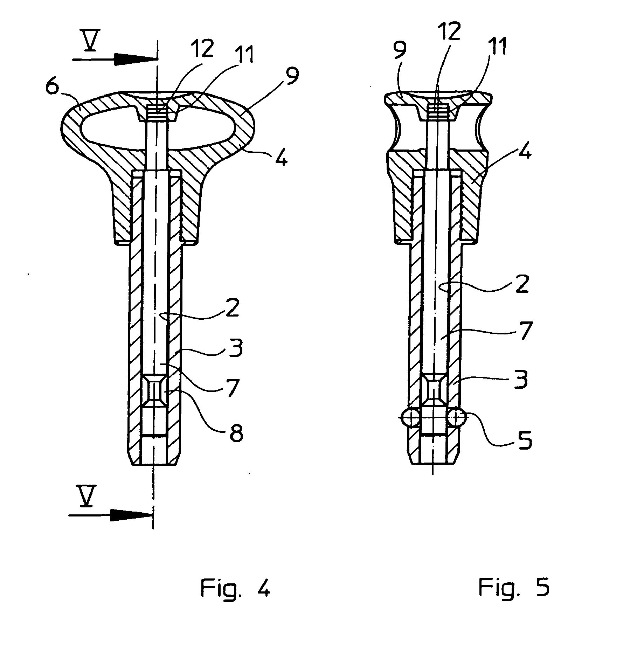

- Fig. 4: einen Längsschnitt durch einen Kugelsperrbolzen, und
- Fig. 5: den Schnitt V-V aus Figur 4.

In der Zeichnung ist ein Kugelsperrbolzen 1 gezeigt, der zu lösbaren Befestigungen an einem in der Zeichnung selber nicht dargestellten Gegenstand dient, wobei der Gegenstand zum Zusammenwirken mit dem Kugelsperrbolzen 1 über eine eine Hinterschneidung aufweisende Öffnung verfügen muss.

Der Kugelsperrbolzen 1 besitzt einen eine Führungsaufnahme 2 aufweisenden Fixierbolzen 3, der mit einem Griff 4 versehen ist und an seinem dem Griff 4 gegenüberliegenden, freien Ende mindestens ein Verriegelungselement 5 aufweist, das bei dem in der Zeichnung dargestellten Asuführungsbeispiel durch zwei Sperrkugeln gebildet ist. Diese Sperrkugeln sind durch einen relativ zum Fixierbolzen 3 in der Führungsaufnahme 2 gegen die Kraft einer am Fixierbolzen 3 abgestützten Feder 6 verschiebbaren Stößel 7 aus einer den Durchtritt des Fixierbolzens 3 durch die Öffnung sperrenden Stellung in eine den Durchtritt freigegebene, in eine Ausnehmung 8 des Stößels 7 reichende Lösestellung verstellbar. Zu beachten ist, dass bei dem in der Zeichnung dargestellten Kugelsperrbolzen 1 der Stößel 7 aus der Führungsaufnahme 2 durch den Griff 4 hindurch aus dem Fixierbolzen 3 herausgeführt ist und die Feder 6 durch einen elastisch verformbaren Steg 9 des Griffes 4 gebildet ist, der dem aus der Führungsaufnahme 2 herausragenden Ende des Stößels 7 anliegt.

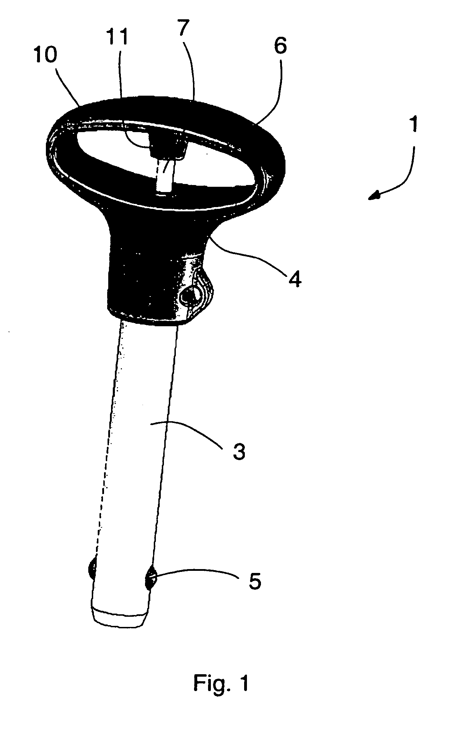

Die Figur 1 zeigt dabei deutlich, dass der Griff 4 einen eine Öse bildenden geschlossenen Ring 10 aufweist, der mit dem dem Fixierbolzen abgewandten Bogen den Steg bildet. Das aus der Führungsaufnahme 2 herausragende Ende des Stößels 7 ist an dem Steg 9 verankert, wozu an dem dem Steg 9 zugeordneten Ende des Stößels 7 mit einer Stegaufnahme 11 zusammenwirkende Widerhaken 12 ausgebildet sind. Die Verankerung des Griffes 4 an dem Fixierbolzen 3 erfolgt in analoger Weise, indem an dem dem Griff 4 zugeordneten Ende des Fixierbolzens 3 mit einer Griffaufnahme 13 zusammenwirkende Widerhaken 14 ausgebildet sind.

Die elastische Verformbarkeit des dem Griff 4 zugeordneten Steges 9 bzw. des die Öse schließenden Bogens wird in einfacher und kostengünstiger Weise hergestellt, indem der Griff 4 als ein aus einem Elastomer gefertigtes Spritzgußteil gebildet ist.

## Patentansprüche

1. Kugelsperrbolzen zur lösbaren Befestigung an einem eine Öffnung mit einer Hinterschneidung aufweisenden Gegenstand, mit einem eine Führungsaufnahme (2) aufweisenden Fixierbolzen (3), der mit einem Griff (4) versehen ist und an seinem dem Griff (4) gegenüberliegenden, freien Ende mindestens ein Verriegelungselement (5) wie eine Sperrkugel oder dergl. aufweist, das durch einen relativ zum Fixierbolzen (3) in der Führungsaufnahme (2) gegen die Kraft einer am Fixierbolzen (3) abgestützten Feder (6) verschiebbaren Stößel (7) aus einer den Durchtritt des Fixierbolzens (3) durch eine Öffnung sperrenden Sperrstellung in eine den Durchtritt freigebende, in eine Ausnehmung des Stößels (7) reichende Lösestellung verstellbar ist, wobei der Stößel (7) aus der Führungsaufnahme (2) durch den Griff (4) hindurch aus dem Fixierbolzen (3) herausgeführt ist, **dadurch gekennzeichnet, daß** die Feder (6) durch einen elastisch verformbaren Steg (9) des Griffes (4) gebildet ist, der dem aus der Führungsaufnahme (2) heraus ragenden Ende des Stößels (7) anliegt.

2. Kugelsperrbolzen nach Anspruch 1, **dadurch gekennzeichnet, daß** der Griff (4) einen eine Öse bildenden geschlossenen Ring (10) aufweist, dessen dem Fixierbolzen (3) abgewandter Bogen den Steg (9) bildet.

3. Kugelsperrbolzen nach Anspruch 1 oder 2, **dadurch gekennzeichnet, daß** das aus der Führungsaufnahme (2) heraus ragende Ende des Stößels (7) in dem Steg (9) verankert ist.

4. Kugelsperrbolzen nach Anspruch 3, **dadurch gekennzeichnet, daß** an dem dem Steg (9) zugeordneten Ende des Stößels (7) mit einer Stegaufnahme (11) zusammenwirkende Widerhaken (12) ausgebildet sind.

5. Kugelsperrbolzen nach einem der Ansprüche 1 bis 4, **dadurch gekennzeichnet, daß** an dem dem Griff (4) zugeordneten Ende des Fixierbolzens (3) mit einer Griffaufnahme (13) zusammenwirkende Widerhaken (14) ausgebildet sind.

6. Kugelsperrbolzen nach einem der Ansprüche 1 bis 5, **dadurch gekennzeichnet, daß** der Griff (4) als aus einem Elastomer gefertigtes Spritzgußteil gebildet ist.

## Claims

1. A ball locking pin for releasably fixing to an article having an opening with an undercut configuration, comprising a fixing pin (3) which has a guide receiving means (2) and which is provided with a handle (4) and which at its free end opposite the handle (4) has at least one locking element (5) like a locking ball or the like which is displaceable by a pushrod (7) slidable relative to the fixing pin (3) in the guide receiving mans (2) against the force of a spring (6) supported against the fixing pin (3), from a locking position of blocking the passage of the fixing pin (3) through an opening, into a release position of enabling the passage of the fixing pin and extending into a recess in the pushrod (7), wherein the pushrod (7) is passed out of the guide receiving means (2) through the handle (4) out of the fixing pin (3), **characterised in that** the spring (6) is formed by an elastically deformable limb (9) of the handle (4), which bears against the end of the pushrod (7), that projects out of the guide receiving meons (2).

2. A ball locking pin according to claim 1 **characterised in that** the handle (4) has a closed ring (10) which forms an eye and whose are portion that is remote from the fixing pin (3) forms the limb (9).

3. A ball locking pin according to claim 1 or claim 2 **characterised in that** the end of the pushrod (7), that projects out of the guide receiving mans (2), is anchored in the limb (9).

4. A ball locking pin according to claim 3 **characterised in that** barbs (12) co-operating with a limb receiving means (11) are provided at the end of the pushrod (7), that is associated with the limb (9).

5. A ball locking pin according to one of claims 1 to 4 **characterised in that** barbs (14) co-operating with a handle receiving means (13) are provided at the end of the fixing pin (3), that is associated with the handle (4).

6. A ball locking pin according to one of claims 1 to 5 **characterised in that** the handle (4) is in the form of an injection moulding made from an elastomer.

## Revendications

1. Goujon à bille de verrouillage pour la fixation amovible à un objet pourvu d'une ouverture à contre-dépouille, comprenant un goujon de fixation (3) pourvu d'un logement de guidage (2) qui est pourvu d'une poignée (4) et qui comporte à son extrémité libre opposée à la poignée (4) au moins un élément de verrouillage (5) comme une bille de verrouillage ou analogue, lequel peut être déplacé par un poussoir (7) pouvant coulisser par rapport au goujon de fixation (3) dans le logement de guidage (2), à l'encontre de la force d'un ressort (6) agissant sur le goujon de fixation (3), d'une position de blocage empêchant le passage du goujon de fixation (3) à travers une ouverture vers une position de déblocage qui autorise le passage et qui utilise un évidement du poussoir (7), le poussoir (7) sorti du logement de guidage (2) étant guidé hors du goujon de fixation (3) à travers la poignée (4), le ressort (6) étant formé par une anse (9) déformable élastiquement de la poignée (4), qui porte sur l'extrémité du poussoir (7) dépassant du logement de guidage (2).

2. Goujon à bille de verrouillage selon la revendication 1, **caractérisé en ce que** la poignée (4) comporte un anneau (10) fermé formant une boucle dont l'arc opposé au goujon de fixation (3) forme l'anse (9).

3. Goujon à bille de verrouillage selon la revendication 1 ou 2, **caractérisé en ce que** l'extrémité du poussoir (7) dépassant du logement de guidage (2) est fixée à l'anse (9) .

4. Goujon à bille de verrouillage selon la revendication 3, **caractérisé en ce que** l'extrémité du poussoir (7) associée à l'anse (9) est conformée avec un crochet (12) qui coopère avec un logement de l'anse (11).

5. Goujon à bille de verrouillage selon une des revendications 1 à 4, **caractérisé en ce que** des crochets (14) coopérant avec un logement de poignée (13) sont formés à l'extrémité du goujon de fixation (3) associée à la poignée (4).

6. Goujon à bille de verrouillage selon une des revendications 1 à 5, **caractérisé en ce que** la poignée (4) est réalisée sous la forme d'une pièce moulée par injection en élastomère.
